Europäisches Patentamt

European Patent Office

Office européen des brevets

(11) Veröffentlichungsnummer: **0 481 121 A1**

(12) **EUROPÄISCHE PATENTANMELDUNG**

(21) Anmeldenummer: **90120096.4**

(22) Anmeldetag: **19.10.90**

(51) Int. Cl.⁵: **H04L 9/32, H04L 9/08**

(43) Veröffentlichungstag der Anmeldung:
**22.04.92 Patentblatt 92/17**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Hitz, Hans-Joachim**
**Frankenstrasse 6**
**W-8021 Strasslach(DE)**

(54) **Authentifizierung für verschlüsselte Kommunikation.**

(57) Die Erfindung betrifft ein Verfahren zur Schlüsselverteilung in einem offenen Kommunikationssystem mit Authentifizierung der Teilnehmerstationen,

bei dem jeweils in der Teilnehmerstation ein geheimer Zufallswert ausgewählt und nach Eingabe in eine Einwegfunktion als öffentliche Schlüsselinformation durch eine signierende Zentrale signiert wird,

bei dem in der Zentrale ähnlich der Signatur nach El Gamal jeweils zu der öffentlichen Schlüsselinformation zwei Signaturparameter für die Teilnehmerstation gebildet werden, bei dem zur Kommunikation zwischen den Teilnehmerstationen die Signaturparameter zusammen mit den öffentlichen Schlüsselinformationen und die Identifikationen ausgetauscht werden, bei dem die Identitäten der Teilnehmerstationen über die Signaturparameter verifizierbar sind, und

bei dem die Teilnehmerstationen gemäß dem Verfahren nach Diffie und Hellmann jeweils aus den öffentlichen Schlüsselinformationen und den eigenen, geheimen Zufallswerten über eine weitere Einwegfunktion einen gemeinsamen, geheimen Schlüssel berechnen.

FIG 3

EP 0 481 121 A1

Die Erfindung betrifft ein Verfahren zur Authentifizierung der Teilnehmer bei verschlüsselter Datenübertragung in einem offenen Kommunikationssystem

Bei Kommunikationssystemen können beispielsweise Sprache, Text, Daten und Bilder auf digitaler Basis auf einer Leitung zwischen den Teilnehmern übertragen werden. Die übertragenen Daten sind an vielen Stellen einer möglichen, unbefugten Kenntnisnahme und Manipulation ausgesetzt.

Zur Sicherung der Daten gegen unbefugte Kenntnisnahme auf der Übertragungsstrecke zwischen den Teilnehmerstationen im Netz sind Verschlüsselungsverfahren bekannt, bei denen Schlüssel zwischen den Teilnehmern ausgetauscht werden müssen. Ein Verfahren hierfür wurde von W. Diffie und M. Hellman entwickelt (New Directions in Cryptography, IEEE Transactions on Information Theory, Vol. IT-22, Nr. 6, Nov. 1976, S. 644 -654).

Hierbei werden zwischen den Kommunikationsteilnehmern öffentliche Schlüsselinformationen ausgetauscht, aus denen jeder lokal einen gemeinsamen, geheimen Schlüssel ableiten kann, der entweder direkt als Schlüssel oder indirekt zur Absprache eines Schlüssels verwendet werden kann. Damit die öffentlich übertragenen Schlüsselinformationen einem Dritten keine Rückschlüsse auf den daraus abgeleiteten Schlüssel erlauben, wird eine Einweg-Funktion mit einer speziellen Kommutativitätseigenschaft verwendet. Jeder der Partner hat einen geheimen Zufallswert, den er dieser Einweg-Funktion eingibt, und er versendet über das Nachrichtennetz als öffentliche Schlüsselinformation nur das erhaltene Ergebnis. Wenn der jeweilige Empfänger dieses Ergebnis zusammen mit seinem eigenen geheimen Zufallswert wieder der Einweg-Funktion eingibt, so sind die beiden Resultate gleich, und die Partner besitzen einen geheimen, gemeinsamen Schlüssel.

Eine weitere Sicherungsmaßnahme in einem offenen Kommunikationssystem ist die Authentifizierung der Teilnehmer. Hierunter sind Maßnahmen zu verstehen, die den Nachweis einer angegebenen Identität ermöglichen. Durch sie wird verhindert, daß ein Unberechtigter in einer Verbindung eine falsche Identität vortäuscht um unrechtmäßigerweise in den Besitz von Informationen zu gelangen oder in Namen und Verantwortung des anderen bestimmte Aktionen zu veranlassen.

Ein Verfahren zur Authentifizierung von Nachrichten ist von El Gamal bekannt. (El Gamal, T.: A Public Key Cryptosysteme and a Signature Schema Based on Discrete Logarithm, IEEE Transaction and Information Theory, Vol. IT-31, No. 4, July 1985, Seiten 469 - 472). Hierbei werden die Nachrichtenblöcke durch eine Signatur, eine digitale Unterschrift, authentifiziert.

Der Erfindung liegt die Aufgabe zugrunde ein Verfahren anzugeben, bei dem die zu jeder verschlüsselten Kommunikation zwischen den Teilnehmerstationen benötigten Schlüssel jeweils neu erzeugt werden, und bei dem die Identität der Teilnehmerstationen verifizierbar ist.

Diese Aufgabe wird erfindungsgemäß durch die im Patentanspruch 1 angegebenen Merkmale gelöst.

Bei dem erfindungsgemäßen Verfahren werden die Kommunikationsschlüssel stets zufällig neu gewählt, wird die Identität direkt verifiziert, und wird die Sicherheit gegen aufgezeichnete Nachrichten erhöht.

Durch das erfindungsgemäße Verfahren ist es weiter möglich, Nachrichten an einen Empfänger zu verschicken, ohne daß dieser aktiv reagiert. Die angewählte Teilnehmerstation legt hierzu eine Reihe von öffentlichen Schlüsselinformationen in einem öffentlich zugänglichen Verzeichnis ab, wobei jede öffentliche Schlüsselinformation aus einem geheimen Zufallswert erzeugt wurde. Die sendende Teilnehmerstation holt sich die öffentliche Schlüsselinformation, kann den zur Kommunikation benötigten geheimen Schlüssel bilden, und ihre eigene öffentliche Schlüsselinformation zusammen mit den Signaturparametern abschicken.

Ein besonderer Vorteil des erfindungsgemäßen Verfahrens liegt darin, daß auch die signierende Zentrale die geheimen Schlüsselinformationen der jeweiligen Teilnehmerstationen nicht kennt.

Im folgenden wird die Erfindung anhand eines in der Zeichnung dargestellten Ausführungsbeispieles beschrieben. Dabei zeigen

Fig. 1     ein offenes Kommunikationssystem,

Fig. 2     ein Ablaufdiagramm für die Authentifizierung, und

Fig. 3     ein Ablaufdiagramm für die Verifizierung der Identität und die anschließende Schlüsselberechnung.

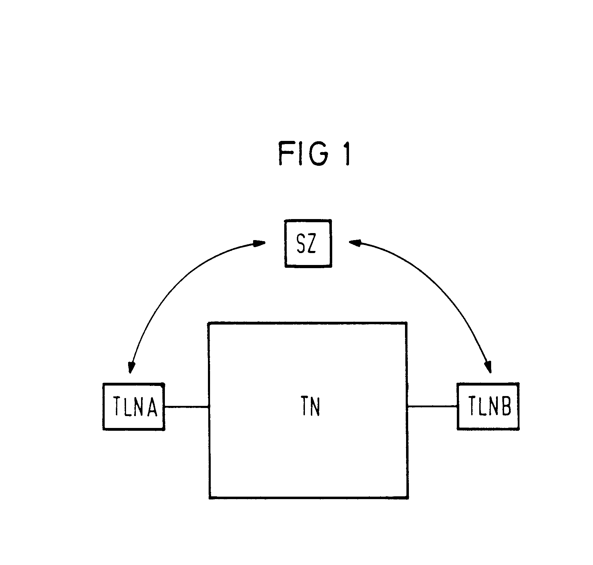

In Fig. 1 sind die für die Erfindung wesentlichen Einrichtungen eines offenen Kommunikationssystems zur digitalen Datenübertragung (beispielsweise Sprache, Text, Bild) dargestellt. Durch ein Teilnehmernetz TN sind Teilnehmerstationen TLN (aus Gründen der Übersichtlichkeit sind nur zwei Hauptanschlüsse, d.h. zwei Teilnehmerstationen TLNA und TLNB dargestellt) miteinander verbunden. Das Teilnehmernetz TN weist die zum Aufbau von Verbindungen benötigten Vermittlungsstellen auf. Die Teilnehmerstationen TLN können beliebig untereinander Daten austauschen. Jede Teilnehmerstation TLN kann noch mehrere Nebenstellen umfassen. Für den verschlüsselten Datenaustausch weisen die Teilnehmerstationen TLN Kryptoeinrichtungen auf.

Zur Authentifizierung der jeweiligen Teilnehmerstation TLN ist eine signierende Zentrale SZ vorgesehen. Zum Erstellen der Signatur ist für jede Teilnehmerstation TLN ein physischer Kontakt mit der signierenden Zentrale SZ notwendig.

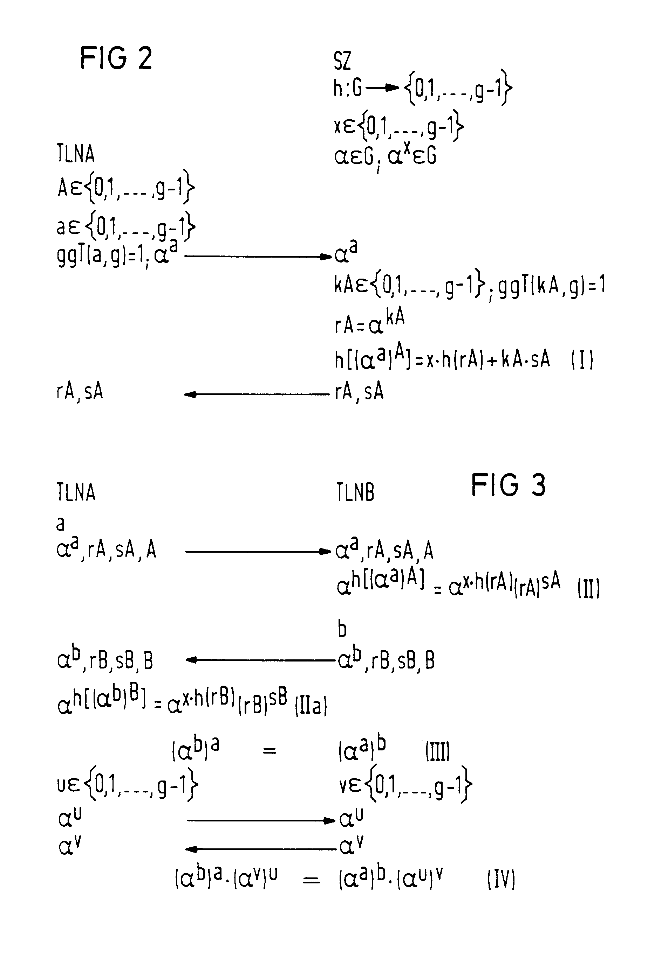

Bei der Beschreibung der Authentifizierung der Teilnehmerstation TLNA durch die signierende Zentrale SZ wird auf Fig. 2 Bezug genommen. Verwendet wird hierzu eine Abelsche Gruppe G der Ordnung g, sowie eine öffentlich bekannte (d.h. den Teilnehmerstationen TLN des Teilnehmernetzes TN bekannte) injektive Abbildung h. Zur Signatur wählt die Zentrale SZ einen geheimen Zufallswert x aus der Wertebereich der Abbildung h aus, und berechnet mittels eines netzweit zugrunde gelegten primitiven Elementes $\alpha$ aus der Gruppe G ihre öffentlich bekanntzugebende Schlüsselinformation $\alpha^x$, die dann an die Teilnehmerstationen TLN verteilt wird. Hierbei wird die Exponentiation (Mehrfachausführung der Gruppenoeration) in der Abelschen Gruppe als Einweg-Funktion verwendet, um die Berechnung des geheimen Zufallwertes x aus der öffentlichen Schlüsselinformation $\alpha^x$ zu verhindern.

Die Teilnehmerstation TLNA hat die den anderen Teilnehmerstationen TLN bekannte öffentliche Identifikation A. Der Wert von A stammt aus der Wertemenge der Abbildung h. Die Teilnehmerstation TLNA wählt aus der Wertemenge der Abbildung h einen geheimen Zufallswert a aus, und übergibt als öffentliche Schlüsselinformation $\alpha^a$ an die Zentrale SZ. Der Zufallswert a ist derart gewählt, so daß der größte gemeinsame Teiler (ggT) aus dem Wert von a und dem Wert der Ordnung g gleich 1 ist.

Die Zentrale SZ bildet zwei Signaturparameter rA und sA. Sie wählt hierzu eine geheime Zufallszahl kA aus der Wertemenge der Abbildung h derart aus, so daß der größte gemeinsame Teiler aus der Zufallszahl kA und der Ordnung g gleich 1 ist. Sie berechnet den ersten Signaturparameter rA durch Exponentiation des primitiven Elements $\alpha$ mit der Zufallszahl kA. Dabei prüft die Zentrale SZ, ob der Wert des ersten Signaturparameters rA für die Teilnehmerstation TLNA bereits einmal in einer Signatur aufgetaucht ist. In diesem Fall wählt sie einen anderen geheimen Zufallswert kA für die Teilnehmerstation TLNA aus.

Die Zentrale SZ bestimmt den zweiten Signaturparameter sA aus der folgenden Gleichung.

$$h[(\alpha^a)^A] = x \cdot h(rA) + kA \cdot sA \qquad (I)$$

Durch den Wert auf der linken Seite der Gleichung (I) ist die öffentliche Schlüsselinformation $\alpha^a$ mit der öffentlichen Identifikation A der Teilnehmerstation TLNA verknüpft.

Die beiden Signaturparameter rA, sA dienen als Signatur bzw. digitale Unterschrift für die öffentliche Identifikation A und öffentliche Schlüsselinformation $\alpha^a$ für die Teilnehmerstation TLNA. Die Zufallswerte kA, x der signierenden Zentrale SZ und der Zufallswert a der Teilnehmerstation TLNA bleiben geheim.

Bei der folgenden Verifizierung der Identität der Teilnehmerstation TLNA in der Teilnehmerstation TLNB wird auch auf die Fig. 3 Bezug genommen. Die Teilnehmerstation TLNA sendet ihre öffentliche Identifikation A und ihre öffentliche Schlüsselinformation $\alpha^a$, sowie die beiden Signaturparameter rA und sA an die Teilnehmerstation TLNB. Die Teilnehmerstation TLNB prüft nun die beiden Seiten der folgenden Gleichung,

$$\alpha^{h[(\alpha^a)^A]} = \alpha^{x \ h(rA)} \cdot (rA)^{sA} \qquad (II)$$

bei der auf der linken Seite die öffentliche Schlüsselinformation $\alpha^a$ mit der Identifikation A der Teilnehmerstation TLNA verknüpft, und auf der rechten Seite die öffentliche Schlüsselinformation $\alpha^x$ der Zentrale SZ und die Signaturparameter rA, sA der Teilnehmerstation TLNA verknüpft sind.

Analog hat die Teilnehmerstation TLNB eine öffentliche Identifikation B, einen geheimen Zufallswert b, beide aus der Wertemenge der Abbildung h. Ebenso hat die Zentrale SZ für die Teilnehmerstation TLNB die beiden Signaturparameter rB und sB gebildet. Dieser Vorgang läuft analog zur Authentifizierung der Teilnehmerstation TLNA in der signierenden Zentrale SZ ab. Die öffentliche Identifikation B und die öffentliche Schlüsselinformation $\alpha^b$ sowie die beiden Signaturparameter rB und sB werden an die Teilnehmerstation TLNA übertragen, und dort in einer zur Gleichung (II) analogen Gleichung

$$\alpha^{h\left[(\alpha^b)^B\right]} = \alpha^{x \cdot h(rB)} \cdot (rB)^{sB} \qquad (IIa)$$

zur Verifizierung der Identität überprüft.

Zu Beginn der Kommunikationsphase zwischen den Teilnehmerstationen TLNA und TLNB werden die in jeder Station geheimen Schlüssel gebildet. Hierzu dient als Grundlage das in der Einleitung beschriebene Verfahren mit öffentlichen Schlüsseln nach Diffie und Hellman. Bei der Beschreibung wird auch auf Fig. 3

EP 0 481 121 A1

Bezug genommen.

Voraussetzung zur Durchführung des Verfahrens ist eine Einweg-Funktion mit einer speziellen Kommutativitätseigenschaft. Als Einweg-Funktion wird die Exponentiation in der Abelschen Gruppe verwendet.

In der Teilnehmerstation TLNA ist die öffentliche Schlüsselinformation $\alpha^b$ der Teilnehmerstation TLNB aus der Identifizierungsphase bekannt. Analog hierzu ist in der Teilnehmerstation TLNB die öffentliche Schlüsselinformation $\alpha^a$ der Teilnehmerstation TLNA bekannt. Es ist möglich, den geheimen Schlüssel in der Teilnehmerstation TLNA durch Exponentiation der öffentlichen Schlüsselinformation $\alpha^b$ der Teilnehmerstation TLNB mit der geheimen Zufallszahl a zu bilden. Analog hierzu wird der geheime Schlüssel in der Teilnehmerstation TLNB durch Exponentiation der öffentlichen Schlüsselinformation $\alpha^a$ der Teilnehmerstation TLNA mit der geheimen Zufallszahl b gebildet. Diese beiden Schlüssel sind einander gleich.

$$(\alpha^b)^a \ = \ (\alpha^a)^b \qquad \text{(III)}$$

Die öffentlichen Schlüsselinformationen $\alpha^a$ und $\alpha^b$ werden nicht oft geändert, und der resultierende Schlüssel ist über einen längeren Zeitraum konstant. Um zu jeder Kommunikation einen neuen Schlüssel zu erstellen, wählen die beiden Teilnehmerstationen TLNA bzw. TLNB jeweils einen weiteren geheimen Zufallswert u bzw. v aus, jeweils aus dem Wertebereich der Abbildung h, und übertragen jeweils als weitere öffentliche Schlüsselinformation $\alpha^u$ bzw. $\alpha^v$ zum Kommunikationspartner, d.h. zur Teilnehmerstation TLNB bzw. TLNA.

Die in den Teilnehmerstationen TLNA bzw. TLNB geheimen Schlüssel (oder Schlüsselparameter zur Bildung eines geheimen Schlüssels) werden nun auf folgende Weise gebildet.

In der Teilnehmerstation TLNA wird jeweils durch Exponetiation der beiden öffentlichen Schlüsselinformationen $\alpha^b$ und $\alpha^v$ der Teilnehmerstation TLNB mit jeweils den eigenen geheimen Zufallswerten a und u und durch anschließende Multiplikation dieser beiden Werte der geheime Schlüssel gebildet.

In der Teilnehmerstation TLNB wird jeweils durch Exponentiation der beiden öffentlichen Schlüsselinformationen $\alpha^a$ und $\alpha^u$ der Teilnehmerstation TLNA mit jeweils den eigenen geheimen Zufallswerten b und v und durch anschließende Multiplikation diese beiden Werte der geheime Schlüssel gebildet.

Diese beiden Schlüssel sind einander gleich.

$$(\alpha^b)^a \ . \ (\alpha^v)^u \ = \ (\alpha^a)^b \ . \ (\alpha^u)^v \qquad \text{(IV)}$$

Bezugszeichenliste

| | |
|---|---|
| TN = | Teilnehmernetz |
| TLN A,B = | Teilnehmerstationen |
| A,B = | öffentliche Identifikation |
| a,b = | geheimer Zufallswert |
| $\alpha$ = | primitives Element einer Gruppe |
| $\alpha^a,\alpha^b$ = | öffentliche Schlüsselinformation |
| rA, rB = | erster Signaturparameter |
| sA, sB = | zweiter Signaturparameter |
| u,v = | weiterer geheimer Zufallwert |
| $\alpha^u,\alpha^v$ = | weitere öffentliche Schlüsselinformation |
| SZ = | signierende Zentrale |
| G = | Abelsche Gruppe |
| g = | Ordnung einer Gruppe |
| $\alpha$ = | primitives Element einer Gruppe |
| h = | injektive Abbildung |
| x = | geheimer Zufallswert |
| $\alpha^x$ = | öffentliche Schlüsselinformation |
| kA = | geheime Zufallszahl |

**Patentansprüche**

1. Verfahren zur Schlüsselverteilung in einem offenen Kommunikationssystem mit Authentifizierung der

4

Teilnehmerstationen (TLNA, B),

bei dem jeweils in der Teilnehmerstation (TLNA, B) ein geheimer Zufallswert (a, b) ausgewählt und nach Eingabe in eine Einwegfunktion (Exponentiation) als öffentliche Schlüsselinformation ($\alpha^a$, $\alpha^b$) durch eine signierende Zentrale (SZ) signiert wird,

bei dem in der Zentrale (SZ) ähnlich der Signatur nach El Gamal jeweils zu der öffentlichen Schlüsselinformation ($\alpha^a$, $\alpha^b$) zwei Signaturparameter (rA, sA, rB, sB) für die Teilnehmerstation (TLNA, B) gebildet werden,

bei dem zur Kommunikation zwischen den Teilnehmerstationen (TLNA, B) die Signaturparameter (rA, sA, rB, sB) zusammen mit den öffentlichen Schlüsselinformationen ($\alpha^a$, $\alpha^b$) und die Identifikationen (A,B) ausgetauscht werden,

bei dem die Identitäten der Teilnehmerstationen (TLNA, B) über die Signaturparameter (rA, sA, rB, sB) verifizierbar (Gleichung II) sind, und

bei dem die Teilnehmerstationen (TLNA, B) gemäß dem Verfahren nach Diffie und Hellmann jeweils aus den öffentlichen Schlüsselinformationen ($\alpha^a$, $\alpha^b$) und den eigenen, geheimen Zufallswerten (a, b) über eine weitere Einwegfunktion (Exponentiation) einen gemeinsamen, geheimen Schlüssel (Gleichung III) berechnen.

2. Verfahren nach Anspruch 1,

bei dem die Teilnehmerstationen (TLNA, B) jeweils zusätzliche weitere öffentliche Schlüsselinformationen ($\alpha^u$, $\alpha^v$) und weitere eigene, geheime Zufallswerte (u, v) zur Berechnung des Schlüssels (Gleichung IV) verwenden.

# FIG 1

## FIG 2

SZ
$h : G \longrightarrow \{0,1,---,g-1\}$
$x \in \{0,1,---,g-1\}$
$\alpha \in G, \ \alpha^x \in G$

TLNA
$A \in \{0,1,---,g-1\}$
$a \in \{0,1,---,g-1\}$
$ggT(a,g)=1; \ \alpha^a \longrightarrow \alpha^a$

$kA \in \{0,1,---,g-1\}; \ ggT(kA,g)=1$
$rA = \alpha^{kA}$
$h[(\alpha^a)^A] = x \cdot h(rA) + kA \cdot sA \quad (I)$

$rA, sA \longleftarrow rA, sA$


## FIG 3

TLNA

$\overset{a}{\alpha^a}, rA, sA, A \longrightarrow \alpha^a, rA, sA, A$

$\alpha^{h[(\alpha^a)A]} = \alpha^{x \cdot h(rA)} (rA)^{sA} \quad (II)$

$\overset{b}{\alpha^b}, rB, sB, B \longleftarrow \alpha^b, rB, sB, B$

$\alpha^{h[(\alpha^b)B]} = \alpha^{x \cdot h(rB)} (rB)^{sB} \quad (IIa)$

$\qquad (\alpha^b)^a \quad = \quad (\alpha^a)^b \quad (III)$

$u \in \{0,1,---,g-1\} \qquad v \in \{0,1,---,g-1\}$

$\alpha^u \longrightarrow \alpha^u$

$\alpha^v \longleftarrow \alpha^v$

$(\alpha^b)^a \cdot (\alpha^v)^u \quad = \quad (\alpha^a)^b \cdot (\alpha^u)^v \quad (IV)$

TLNB

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PROCEEDINGS OF CRYPTO '87, August 1987, Seiten 9-18, Springer-Verlag, Berlin, DE; K. PRESTTUN: "Intergrating cryptography in ISDN" <br> * Seite 9, Zeile 8 - Seite 10, Zeile 7; Seite 10, Zeilen 13-15; Seite 10, Zeile 26 - letzte Zeile * <br> – – – | 1 | H 04 L 9/32 <br> H 04 L 9/08 |
| A | PROCEEDINGS OF EUROCRYPT '88, Mai 1988, Seiten 77-84, Springer-Verlag, Berlin, DE; T. BETH: "Efficient zero-knowledge identification scheme for smart cards" <br> * Seite 77, letzter Abschnitt - Seite 80, Zeile 2 * <br> – – – | 1 | |
| A | DE-A-3 915 262   (ASEA-BROWN-BOVERI) <br> * Spalte 2, Zeile 21 - Spalte 3, Zeile 4 * <br> – – – – – | 1,2 | |

| RECHERCHIERTE SACHGEBIETE (Int. Cl.5) |
|---|
| H 04 L |

Der vorliegende Recherchenbericht wurde für alle Patentansprüche erstellt

| Recherchenort | Abschlußdatum der Recherche | Prüfer |
|---|---|---|
| Den Haag | 14 Juni 91 | HOLPER G.E.E. |